# EUROPEAN PATENT APPLICATION

(11) **EP 4 830 945 A1**
(43) Date of publication of application: **28.10.2026**
(21) Application number: 26172971.9
(22) Date of filing: 17.04.2026
(51) Int. Cl.: B60C 11/03, B60C 11/12

(54) **PNEUMATIC TIRE**

(30) Priority: 23.04.2025 JP 2025071386; 23.04.2025 JP 2025071387
(71) Applicant: Toyo Tire Corporation, Itami-shi, Hyogo 664-0847 (JP)
(72) Inventor: NAKATANI, Akito, Itami-shi, Hyogo, 664-0847 (JP)
(74) Representative: Müller-Boré & Partner Patentanwälte PartG mbB

(57) **Abstract**

A pneumatic tire is provided for which occurrence of a hydroplaning phenomenon is suppressed and steering stability under wet conditions is improved even under various road surface conditions and during high-speed traveling. A tread (5) includes a shoulder main groove (20) that extends while inclining toward a ground contact edge (90) on the inner side (W1) in the vehicle width direction, and extends in a tire circumferential direction while long portions (21) and short portions (22) having mutually different inclination angles are alternately continuous, and a shoulder land (70) disposed on the inner side (W1) in the vehicle width direction of the shoulder main groove (20). The shoulder land (70) includes a first inclined groove (31) that extends from the short portions (22) and inclines toward the trailing side (C2), and a second inclined groove (32) that extends from the long portions (21) and inclines toward the trailing side (C2).

## Description

This application is based on and claims the benefit of priority from Japanese Patent Application Nos. 2025-071386 and 2025-071387, respectively filed on 23 April 2025 and 23 April 2025, the contents of which are incorporated herein by reference.

### BACKGROUND OF THE INVENTION

### Field of the Invention

The present invention relates to a pneumatic tire.

### Related Art

Conventionally, tires having a specified rotation direction have been known. As such a tire, Patent Document 1 discloses a tire including inclined grooves that are continuous with each other via a shoulder main groove, the inclined grooves being provided in a middle land portion located between a crown main groove at a center in a tread width direction and the shoulder main groove, and in a shoulder land portion located outward of the shoulder main groove in the tread width direction. The inclined grooves are grooves that incline toward a trailing side in a tire rotation direction (a side opposite to the tire rotation direction) as the inclined grooves extend toward an outer side in the tread width direction, and include middle lateral grooves of the middle land portion and shoulder lateral grooves of the shoulder land portion. These grooves are said to exhibit high drainage performance.

Patent Document 1: Japanese Unexamined Patent Application Publication No. 2020-142785

### SUMMARY OF THE INVENTION

Even in conventional tires, while traveling under wet conditions, for example, when traveling through a puddle having a large water depth or during high-speed traveling, there has been concern over a hydroplaning phenomenon occurring due to insufficient drainage performance, and there has been room for improvement.

Accordingly, an object of the present invention is to provide a pneumatic tire for which the occurrence of a hydroplaning phenomenon is suppressed and steering stability under wet conditions is improved even under various road surface conditions and during high-speed traveling.

A pneumatic tire of the present invention is a pneumatic tire, including a tread including a ground contact edge with respect to a road surface, the pneumatic tire having a specified rotation direction. The tread includes: a shoulder main groove that extends, on an inner side in a vehicle width direction, while inclining toward the ground contact edge on the inner side in the vehicle width direction as the shoulder main groove extends from a leading side toward a trailing side on the road surface during tire rotation, the shoulder main groove extending in a tire circumferential direction while long portions and short portions having mutually different inclination angles are alternately continuous; and a shoulder land disposed on the inner side in the vehicle width direction of the shoulder main groove. The shoulder land includes: a first inclined groove that extends toward the ground contact edge continuously with the short portions and inclines toward the trailing side as the first inclined groove extends toward the ground contact edge; and a second inclined groove that extends toward the ground contact edge from the long portions and inclines toward the trailing side as the second inclined groove extends toward the ground contact edge.

According to the present invention, it is possible to provide a pneumatic tire for which the occurrence of a hydroplaning phenomenon is suppressed and steering stability under wet conditions is improved even under various road surface conditions and during high-speed traveling.

### BRIEF DESCRIPTION OF THE DRAWINGS

FIG. 1 is a diagram illustrating a tread pattern of a pneumatic tire according to an embodiment;
FIG. 2 is an enlarged view of a portion indicated by II in FIG. 1; and
FIG. 3 is an enlarged view of a portion indicated by III in FIG. 1.

### DETAILED DESCRIPTION OF THE INVENTION

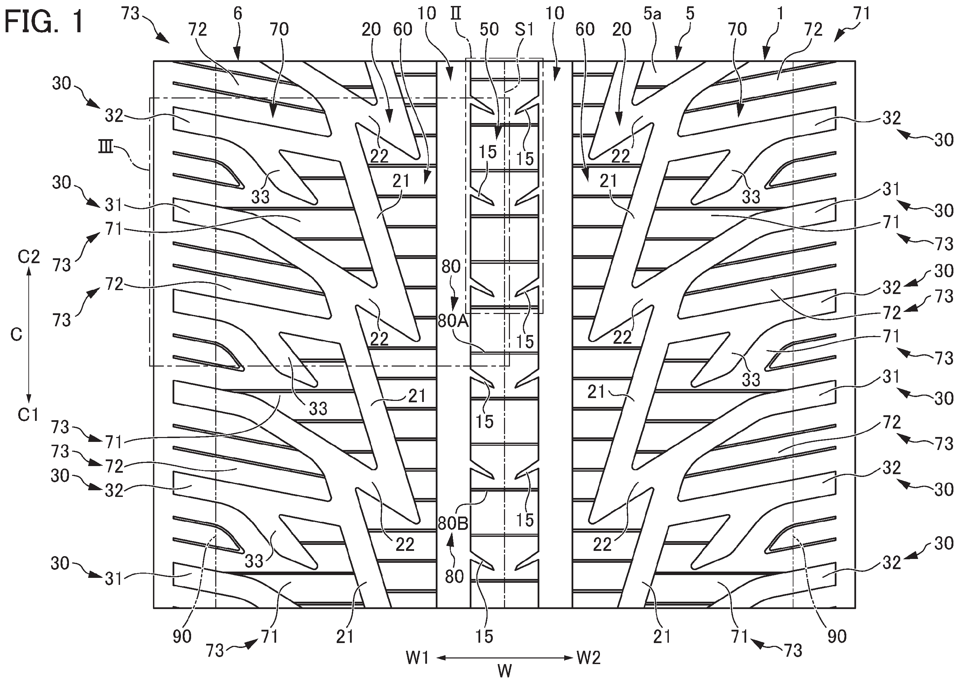

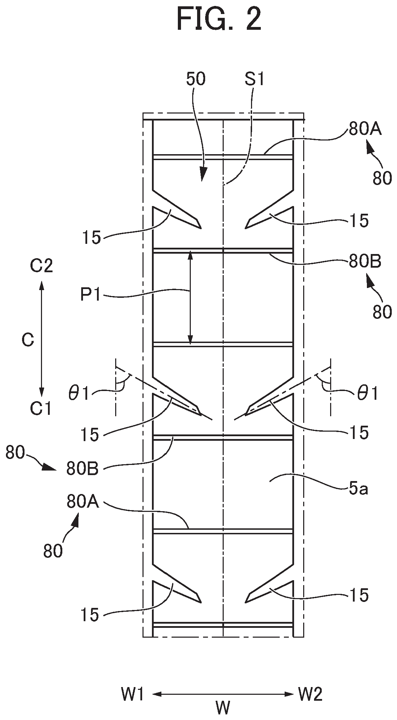

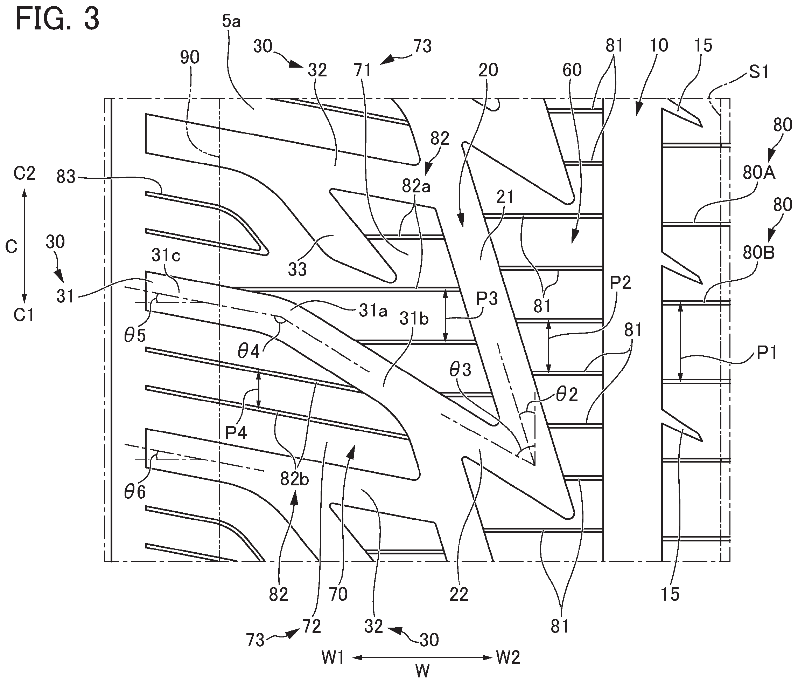

Hereinafter, embodiments will be described with reference to the drawings. FIG. 1 is a plan view illustrating a part of a tread 5 of a tire 1 that is a pneumatic tire according to an embodiment. FIG. 1 illustrates a tread pattern 6 provided in a tread surface 5a that is a surface of the tread 5. FIG. 2 is an enlarged view of a portion indicated by II in FIG. 1. FIG. 3 is an enlarged view of a portion indicated by III in FIG. 1.

The tire 1 of the embodiment including the tread 5 is a tire having a specified rotation direction, and is suitable, for example, as a rain tire for a racing vehicle that travels at high speed. The configuration of the tire 1 according to the embodiment is not limited to a rain tire, and the tire 1 can be adopted as a pneumatic tire for various other vehicles.

In FIGS. 1 to 3, a tread width direction parallel to a rotation axis direction of the tire 1 is indicated by an arrow W, and, in a state where the tire 1 is mounted on a vehicle, an inner side in a vehicle width direction is indicated by W1, and an outer side in the vehicle width direction is indicated by W2. The tread width direction is also a left-right direction of the tread 5, and both W1 and W2 are outer sides in the tread width direction. In FIGS. 1 to 3, a tire circumferential direction is indicated by an arrow C, one side in the tire circumferential direction is indicated by C1, and the other side in the tire circumferential direction is indicated by C2. Here, a direction of the arrow C1 is a rotation direction specified for the tire 1. The C1 is a leading side that comes into contact with a road surface first during tire rotation, and the C2 is a trailing side that comes into contact with the road surface later during tire rotation.

A tire equator S1 is illustrated in FIGS. 1 to 3. The tire equator S1 is an imaginary line extending along the tire circumferential direction at a center of the tread surface 5a in the tread width direction. Ground contact edges 90, which are ends of the tread surface 5a on both sides in the tread width direction that come into contact with a road surface, are illustrated in FIGS. 1 and 3.

The tread pattern 6 of the embodiment is a bilaterally symmetric pattern having the tire equator S1 as a line of symmetry. Hereinafter, the tread pattern 6 included in the tread 5 of the embodiment will be described.

As illustrated in FIG. 1, the tread pattern 6 includes: a pair of left and right center main grooves 10; a center land 50; a pair of left and right shoulder main grooves 20; a pair of left and right intermediate lands 60; and a pair of left and right shoulder lands 70.

Each of the pair of left and right center main grooves 10 is disposed on both sides of the tire equator S1 in the tread width direction, and between the tire equator S1 and the shoulder main groove 20. The center main groove 10 is a groove extending linearly along the tire circumferential direction. A width and a depth of the center main groove 10 are, for example, a width of approximately between 10 mm and 20 mm inclusive, and a depth of approximately between 4 mm and 8 mm inclusive, but are not limited thereto. The center main groove 10 is not limited to a linear shape, and may have, for example, a zigzag shape extending along the tire circumferential direction.

The center land 50 is formed between the pair of center main grooves 10. The center land 50 is formed in a rib shape extending along the tire circumferential direction. The tire equator S1 passes through a substantially central portion of the center land 50 in a width direction. A width of the center land 50 is, for example, approximately between 15 mm and 40 mm inclusive, but is not limited thereto.

The center land 50 includes a plurality of notches 15. As illustrated in FIG. 2, the plurality of notches 15 include pairs, each formed by a pair of left and right notches 15 disposed at substantially the same position in the tire circumferential direction, in which a plurality of pairs of the notches 15 are disposed at substantially equal intervals in the tire circumferential direction. Each of the pair of left and right notches 15 communicates with a corresponding one of the pair of left and right center main grooves 10. Each notch 15 extends from the center main groove 10 while inclining toward a leading side (a lower side in FIGS. 1 and 2) as the notch 15 extends toward the tire equator S1, terminates before reaching the tire equator S1, and is closed within the center land 50.

As illustrated in FIG. 2, a shape of the notch 15 on a tire surface has a tapered shape in which a groove width decreases from an opening communicating with the center main groove 10 toward a terminal end. The notch 15 has a groove shape in which a depth decreases from the opening communicating with the center main groove 10 toward the terminal end. A width and a depth of the notch 15 are, for example, such that a maximum width is approximately between 2 mm and 6 mm inclusive, a minimum width is approximately between 0.5 mm and 3 mm inclusive, and a maximum depth is approximately between 4 mm and 8 mm inclusive, but are not limited thereto. An inclination angle θ1 of the notch 15 with respect to the tire circumferential direction is, for example, approximately between 20° and 90° inclusive, but is not limited thereto.

As illustrated in FIGS. 1 and 2, the center land 50 includes a plurality of center sipes 80. Each center sipe 80 is disposed at a position that does not overlap the pair of left and right notches 15 in the tire circumferential direction, and is disposed at substantially equal intervals in the tire circumferential direction. The center sipe 80 is a narrow groove extending in the tread width direction, extends across the center land 50 in the width direction, and communicates with the center main grooves 10 on both sides of the center land 50. A width of the center sipe 80 is, for example, approximately between 0.5 mm and 2 mm inclusive, but is not limited thereto.

The center sipes 80 of the embodiment include a plurality of first center sipes 80A and a plurality of second center sipes 80B. The first center sipes 80A and the second center sipes 80B are alternately disposed in the tire circumferential direction. An interval in the tire circumferential direction between the first center sipes 80A and the second center sipes 80B, that is, an interval P1 in the tire circumferential direction between adjacent center sipes 80 in the tire circumferential direction, is, for example, between 10 mm and 30 mm inclusive, but is not limited thereto. Here, the interval P1 refers to an interval between width-direction centers of adjacent center sipes 80 in the tire circumferential direction. Intervals P2, P3, and P4 described later are defined in the same manner.

A width of the first center sipe 80A and a width of the second center sipe 80B may be common at, for example, approximately 1 mm. In the embodiment, however, a depth of the first center sipe 80A is preferably greater than a depth of the second center sipe 80B. For example, the depth of the first center sipe 80A is between 50% and 100% inclusive, preferably between 60% and 80% inclusive, relative to a depth of the center main groove 10. For example, the depth of the second center sipe 80B is 10% to 25% inclusive relative to the depth of the center main groove 10. More specifically, for example, the depth of the first center sipe 80A is approximately between 2 mm and 8 mm inclusive, preferably between 2.4 mm and 6.4 mm inclusive, and the depth of the second center sipe 80B is approximately between 0.4 mm and 2 mm inclusive. As illustrated in FIG. 2, between a pair of left and right notches 15 adjacent in the tire circumferential direction, the first center sipe 80A having a greater depth is disposed on a leading side (C1) relative to the second center sipe 80B having a smaller depth. Accordingly, an optimal ground contact shape with respect to a road surface is easily obtained, heat generation increases due to a reduction in rigidity of the center land 50, and grip performance is ensured.

As illustrated in FIG. 1, each of the pair of left and right shoulder main grooves 20 is respectively disposed on an inner side in the vehicle width direction and on an outer side in the vehicle width direction of the pair of left and right center main grooves 10. FIG. 3 illustrates a part of the shoulder main groove 20 disposed on the inner side in the vehicle width direction of the left center main groove 10. The configuration of the shoulder main groove 20 illustrated in FIG. 3 is common to the shoulder main groove 20 disposed on the outer side in the vehicle width direction and, therefore, a description thereof is omitted.

As illustrated in FIG. 3, the shoulder main groove 20 includes a plurality of long portions 21 and a plurality of short portions 22 having a length smaller than that of the long portions 21. The long portions 21 and the short portions 22 are disposed in a state of being alternately continuous in the tire circumferential direction.

As illustrated in FIG. 3, the long portion 21 extends while inclining toward the ground contact edge 90 on the inner side in the vehicle width direction as the long portion 21 extends from a leading side to a trailing side (from a lower side to an upper side in FIG. 3). The short portion 22 extends from a leading-side tip end of the long portion 21 while inclining toward the ground contact edge 90 on the inner side in the vehicle width direction as the short portion 22 extends from the leading side to the trailing side (from a lower side to an upper side in FIG. 3). The long portion 21 and the short portion 22 have different inclination angles with respect to the tire circumferential direction from the leading side toward the trailing side, and the inclination angle of the long portion 21 is smaller than that of the short portion 22. For example, an inclination angle θ2 of the long portion 21 with respect to the tire circumferential direction is 10° to 60° inclusive, and an inclination angle θ3 of the short portion 22 with respect to the tire circumferential direction is 40° to 90° inclusive, but the inclination angles are not limited thereto. The shoulder main groove 20 extends in a zigzag shape in the tire circumferential direction while the long portions 21 and the short portions 22 having mutually different inclination angles are alternately continuous. A portion at which leading-side ends of the long portion 21 and the short portion 22 intersect is formed in a V shape toward the trailing side and toward the tire equator side. The above-described pair of left and right notches 15 are disposed in two pairs for each one long portion 21, that is, two pairs of the left and right notches 15 are disposed for one pitch of the long portion 21.

A width and a depth of the long portions 21 and the short portions 22 of the shoulder main groove 20 may be equal to each other. For example, the width is approximately between 5 mm and 20 mm inclusive, and the depth is approximately between 3 mm and 8 mm inclusive, but are not limited thereto.

As illustrated in FIG. 1, a pair of left and right intermediate lands 60 are formed between the pair of left and right center main grooves 10 and the pair of left and right shoulder main grooves 20, respectively. The intermediate lands 60 are formed in a rib shape extending along the tire circumferential direction.

As illustrated in FIG. 3, each intermediate land 60 includes a plurality of intermediate sipes 81 extending in the tread width direction and disposed at substantially equal intervals in the tire circumferential direction. The respective intermediate sipes 81 are disposed at substantially equal intervals in the tire circumferential direction. The intermediate sipe 81 is a narrow groove extending in the tread width direction, extends across the intermediate land 60 in the width direction, and communicates with the center main groove 10 and the shoulder main groove 20 on both sides of the intermediate land 60. An interval P2 in the tire circumferential direction between adjacent intermediate sipes 81 in the tire circumferential direction is smaller than the interval P1 in the tire circumferential direction between the plurality of center sipes 80. The interval P2 in the tire circumferential direction between the intermediate sipes 81 is, for example, approximately between 10 mm and 20 mm inclusive, but is not limited thereto.

As illustrated in FIG. 1, a pair of left and right shoulder lands 70 are formed outward of the pair of left and right shoulder main grooves 20 in the tread width direction. FIG. 3 illustrates a part of the shoulder land 70 disposed on the inner side in the vehicle width direction of the left center main groove 10. The configuration of the shoulder land 70 illustrated in FIG. 3 is common to the shoulder land 70 disposed on the outer side in the vehicle width direction and, therefore, a description thereof is omitted.

As illustrated in FIG. 3, the shoulder land 70 includes: a plurality of inclined grooves 30 extending from the shoulder main groove 20 toward the ground contact edge 90; and a plurality of shoulder blocks 73 arranged in the tire circumferential direction.

The plurality of inclined grooves 30 include a plurality of first inclined grooves 31 and a plurality of second inclined grooves 32. The first inclined grooves 31 and the second inclined grooves 32 are alternately disposed at substantially the same intervals in the tire circumferential direction.

The first inclined groove 31 extends toward the ground contact edge 90 continuously with the short portion 22 of the shoulder main groove 20, and inclines toward the trailing side as the first inclined groove 31 extends toward the ground contact edge 90. The first inclined groove 31 further includes, in a middle portion thereof, a bent portion 31a that protrudes toward the trailing side at an obtuse angle. Accordingly, the first inclined groove 31 includes: the bent portion 31a; a continuous portion 31b that is located closer to the short portion 22 than the bent portion 31a and is continuous with the short portion 22; and a tip portion 31c that is located closer to the ground contact edge 90 than the bent portion 31a and is shorter than the continuous portion 31b. The continuous portion 31b is located on an extension of the short portion 22 and extends linearly along a direction in which the short portion 22 extends. The tip portion 31c passes through the ground contact edge 90 and extends outward of the ground contact edge 90 in the tread width direction. An angle θ4 of the bent portion 31a is, for example, approximately between 120° and 170° inclusive, but is not limited thereto. By including the bent portion 31a, the first inclined groove 31 is bent such that an inclination angle with respect to the tread width direction becomes smaller in a vicinity passing through the ground contact edge 90. The above-described notches 15 incline substantially along the short portion 22 of the shoulder main groove 20 and the continuous portion 31b of the first inclined groove 31.

The second inclined groove 32 extends from the long portion 21 of the shoulder main groove 20 toward the ground contact edge 90, and inclines toward the trailing side as the second inclined groove 32 extends toward the ground contact edge 90. The second inclined groove 32 extends linearly toward the ground contact edge 90 from a starting point that is located in a middle portion of the long portion 21 and adjacent to the first inclined groove 31. The second inclined groove 32 passes through the ground contact edge 90 and extends outward of the ground contact edge 90 in the tread width direction.

An inclination angle θ5 of the tip portion 31c of the first inclined groove 31 with respect to the tread width direction and an inclination angle θ6 of the second inclined groove 32 with respect to the tread width direction are preferably substantially the same. That is, in a vicinity passing through the ground contact edge 90, the inclination angles of the first inclined groove 31 and the second inclined groove 32 with respect to the tread width direction are preferably substantially the same. The inclination angles θ5 and θ6 are, for example, approximately between 5° and 45° inclusive, but are not limited thereto. The first inclined groove 31 and the second inclined groove 32 contribute to an improvement in drainage performance, but when the inclination angles θ5 and θ6 are less than 5°, drainage performance, particularly in a puddle, decreases and, therefore, the above range is preferable.

The shoulder land 70 further includes a plurality of branch grooves 33. Each branch groove 33 is a groove branching from a corresponding second inclined groove 32 toward a first inclined groove 31 on the leading side, inclines toward the tire equator S1 side as the branch groove 33 extends toward the first inclined groove 31, terminates before reaching the first inclined groove 31, and is closed within the shoulder land 70. The branch groove 33 may have a tapered shape in which a width decreases toward a terminal end, and a groove depth on a terminal end side may gradually decrease toward the terminal end.

Widths and depths of the first inclined grooves 31, the second inclined grooves 32, and the branch grooves 33 may be equal to each other. For example, the width is approximately between 5 mm and 20 mm inclusive, and the depth is approximately between 3 mm and 8 mm inclusive, but are not limited thereto.

As illustrated in FIGS. 1 and 3, a plurality of shoulder blocks 73 arranged in the tire circumferential direction are tire blocks defined by the shoulder main groove 20 and the inclined grooves 30 within the shoulder land 70. The shoulder blocks 73 of the embodiment include first shoulder blocks 71 and second shoulder blocks 72.

Each first shoulder block 71 is defined by a part of the shoulder main groove 20, a first inclined groove 31, and a second inclined groove 32 adjacent to the first inclined groove 31 on the trailing side. The branch groove 33 is included in the first shoulder block 71.

Each second shoulder block 72 is defined by a part of the shoulder main groove 20, a first inclined groove 31, and a second inclined groove 32 adjacent to the first inclined groove 31 on the leading side.

The shoulder blocks 73 include a plurality of shoulder sipes 82 that extend in a direction intersecting the tire circumferential direction and are disposed at substantially equal intervals in the tire circumferential direction.

As illustrated in FIG. 3, the plurality of shoulder sipes 82 include: a plurality of first shoulder sipes 82a provided in the first shoulder blocks 71; and a plurality of second shoulder sipes 82b provided in the second shoulder blocks 72.

The plurality of first shoulder sipes 82a provided in the first shoulder blocks 71 extend in the tread width direction. The first shoulder sipes 82a extend across the first shoulder blocks 71 in the width direction and communicate with the long portions 21 of the shoulder main groove 20 and either of the first inclined grooves 31 or the branch grooves 33. An interval P3 in the tire circumferential direction between adjacent first shoulder sipes 82a in the tire circumferential direction is smaller than the interval P1 in the tire circumferential direction between the plurality of center sipes 80. The interval P3 in the tire circumferential direction between the first shoulder sipes 82a is, for example, between 10 mm and 20 mm inclusive, but is not limited thereto.

The plurality of second shoulder sipes 82b provided in the second shoulder blocks 72 incline toward the trailing side as the second shoulder sipes 82b extend toward the ground contact edge 90. Each second shoulder sipe 82b extends substantially parallel along the tip portion 31c of the first inclined groove 31 and the second inclined groove 32. That is, the second shoulder sipes 82b extend along at least a part of the inclined grooves 30.

Each second shoulder sipe 82b has an inner end in the tread width direction (a right side in FIG. 3) that communicates with either the long portion 21 of the shoulder main groove 20 or the continuous portion 31b of the first inclined groove 31. An interval P4 in the tire circumferential direction between adjacent second shoulder sipes 82b in the tire circumferential direction is smaller than the interval P1 in the tire circumferential direction between the plurality of center sipes 80. The interval P4 in the tire circumferential direction between the second shoulder sipes 82b is, for example, between 5 mm and 20 mm inclusive, but is not limited thereto.

As illustrated in FIG. 3, each first shoulder block 71 further includes a U-shaped sipe 83 having a substantially U-shaped configuration. The U-shaped sipe 83 is disposed between the tip portion 31c of the first inclined groove 31 and the second inclined groove 32 adjacent to the first inclined groove 31 on the trailing side, and passes through the ground contact edge 90. The U-shaped sipe 83 has an opening side in which both end portions are spaced apart from each other in the tire circumferential direction and are disposed on an outer side in the tread width direction, and the U-shaped sipe 83 is disposed substantially parallel to the tip portion 31c of the first inclined groove 31 and the second inclined groove 32 as a whole.

Widths and depths of the intermediate sipes 81 disposed in the intermediate lands 60, the shoulder sipes 82 (the first shoulder sipes 82a and the second shoulder sipes 82b) disposed in the shoulder lands 70, and the U-shaped sipes 83 described above are, for example, such that the widths are approximately between 0.5 mm and 2 mm inclusive and the depths are approximately between 0.4 mm and 2 mm inclusive, but are not limited thereto. The widths and depths of these sipes may all be common, at least one thereof may be different, or all thereof may be different.

In the tread surface 5a of the tire 1 according to the embodiment, a void ratio, which is an area ratio occupied by the above-described grooves and sipes with respect to an entire area of the tread surface 5a, is preferably 50% or less.

With the tire 1 of the embodiment having the above-described configuration, the following effects can be achieved.
(1) The tire 1 according to the embodiment is a pneumatic tire including the tread 5 including the ground contact edges 90 with respect to a road surface, the tire 1 having a specified rotation direction. The tread 5 includes: the shoulder main groove 20 that extends toward an inner side in the vehicle width direction while inclining toward the ground contact edge 90 on the inner side in the vehicle width direction as the shoulder main groove 20 extends from a leading side to a trailing side on the road surface during tire rotation, and extends in the tire circumferential direction while the long portions 21 and the short portions 22 having mutually different inclination angles are alternately continuous; and the shoulder land 70 disposed on an inner side of the shoulder main groove 20 in the vehicle width direction. The shoulder land 70 includes: the first inclined grooves 31 that extend toward the ground contact edge 90 continuously with the short portions 22 and incline toward the trailing side as the first inclined grooves 31 extend toward the ground contact edge 90; and the second inclined grooves 32 that extend toward the ground contact edge 90 from the long portions 21 and incline toward the trailing side as the second inclined grooves 32 extend toward the ground contact edge 90.
   In a vehicle, a camber angle may be applied to a mounted tire, and when the camber angle is a negative camber, an inner side of the tread in the vehicle width direction has a higher ground contact pressure than an outer side thereof and is more susceptible to the influence of road surface conditions. Here, when the tire 1 according to the embodiment is given a negative camber and travels on a road surface under wet conditions, a water-scooping action occurs in which moisture on the road surface is scraped out from the leading side toward the trailing side, that is, toward a rear of the vehicle, by the shoulder main groove 20, the first inclined grooves 31, and the second inclined grooves 32 provided on the inner side of the tread 5 in the vehicle width direction, and high drainage performance is exhibited. For example, even when a water depth of a puddle formed on the road surface is large or when high-speed traveling is performed, with the tire 1 of the embodiment, the above-described water-scooping action can occur, whereby the occurrence of a hydroplaning phenomenon is suppressed. Therefore, with the tire 1 of the embodiment, even under various road surface conditions and during high-speed traveling, the occurrence of the hydroplaning phenomenon is suppressed and steering stability under wet conditions is improved.
(2) In the tire 1 according to the embodiment described in (1) above, the first inclined grooves 31 are bent such that an inclination angle with respect to the tread width direction becomes smaller in a vicinity passing through the ground contact edge 90, and in a vicinity of the ground contact edge 90, the inclination angles of the first inclined grooves 31 and the second inclined grooves 32 with respect to the tread width direction are substantially the same, and the first inclined grooves 31 and the second inclined grooves 32 are disposed at substantially the same intervals in the tire circumferential direction.
   Accordingly, drainage flow from a vicinity of the ground contact edge 90 toward an outer side of the tread 5 by the first inclined grooves 31 and the second inclined grooves 32 becomes smoother, and drainage performance by the water-scooping action is further improved. As a result, the occurrence of the hydroplaning phenomenon is suppressed during high-speed traveling or the like, and steering stability under wet conditions is improved.
(3) In the tire 1 according to the embodiment described in (1) and (2) above, the shoulder land 70 includes the branch grooves 33 that branch from the second inclined grooves 32 toward the leading side and are closed within the shoulder land 70.
   Accordingly, the rigidity of the shoulder land 70 is moderately reduced, and thus the shoulder land 70 becomes more movable and heat generation increases. By the increase in heat generation, grip performance of the shoulder land 70 is improved even under wet conditions. Further, since the groove area is increased by providing the branch grooves 33, the occurrence of the hydroplaning phenomenon in a puddle having a large water depth is suppressed.
(4) In the tire 1 according to the embodiment described in (1) to (3) above, the tread 5 includes the center main grooves 10 extending in the tire circumferential direction between the tire equator S1 and the shoulder main grooves 20.

Accordingly, straight-line stability is improved and drainage performance is ensured.

The present invention is not limited to the above-described embodiments, and modifications, improvements, and the like made within a range capable of achieving the object of the present invention are included in the scope of the present invention.

### <A>

### <A-1>

A pneumatic tire includes a tread including a ground contact edge with respect to a road surface, the pneumatic tire having a specified rotation direction,
in which the tread includes: a shoulder main groove that extends, on an inner side in a vehicle width direction, while inclining toward the ground contact edge on the inner side in the vehicle width direction as the shoulder main groove extends from a leading side toward a trailing side on the road surface during tire rotation, the shoulder main groove extending in a tire circumferential direction while long portions and short portions having mutually different inclination angles are alternately continuous; and
a shoulder land disposed on the inner side in the vehicle width direction of the shoulder main groove. The shoulder land includes: a first inclined groove that extends toward the ground contact edge continuously with the short portions and inclines toward the trailing side as the first inclined groove extends toward the ground contact edge; and a second inclined groove that extends toward the ground contact edge from the long portions and inclines toward the trailing side as the second inclined groove extends toward the ground contact edge.

### <A-2>

In the pneumatic tire as described in <A-1>,
the first inclined groove is bent such that an inclination angle with respect to a tread width direction becomes smaller in a vicinity passing through the ground contact edge,
in a vicinity of the ground contact edge, inclination angles of the first inclined groove and the second inclined groove with respect to the tread width direction are substantially the same, and
the first inclined groove and the second inclined groove are disposed at substantially the same intervals in the tire circumferential direction.

### <A-3>

In the pneumatic tire as described in <A-1> or <A-2>, the shoulder land includes a branch groove that branches from the second inclined groove toward the leading side and is closed within the shoulder land.

### <A-4>

In the pneumatic tire as described in <A-1> or <A-2>, the tread includes a center main groove extending in the tire circumferential direction between a tire equator and the shoulder main groove.

The present invention further includes a pneumatic tire described in the following <B>.

### <B>

Conventionally, tires having a specified rotation direction have been known. As such tires, for example, tires have been proposed that include a crown land portion (center land) extending in a tire circumferential direction between a pair of crown main grooves at a center in a tread width direction, and inclined grooves on both sides of the crown land portion in the tread width direction. The inclined grooves are grooves that incline toward a trailing side in a tire rotation direction (a side opposite to the tire rotation direction) as the inclined grooves extend toward an outer side in the tread width direction, and include middle lateral grooves of a middle land portion and shoulder lateral grooves of a shoulder land portion, and these grooves are said to exhibit high drainage performance. In this type of tire, steering stability tends to be improved when grip performance of the center land is ensured, but during traveling under wet conditions, grip performance of the center land tends to deteriorate. This tendency becomes remarkable, for example, during high-speed traveling or in a case where ground contact pressure decreases due to weight reduction of a vehicle and, therefore, there has been room for improvement. Accordingly, the present disclosure aims to provide a pneumatic tire for which grip performance of a center land is ensured and steering stability is improved, particularly while traveling under wet conditions. The pneumatic tire as described in <B> includes the following combinations.

### <B-1>

A pneumatic tire includes a tread including a ground contact edge with respect to a road surface, the pneumatic tire having a specified rotation direction,
in which the tread includes:
a pair of center main grooves disposed on both sides of a tire equator and extending in the tire circumferential direction; and
a center land disposed between the pair of center main grooves and extending in the tire circumferential direction, and in which the center land includes a pair of notches that communicate with respective ones of the pair of center main grooves, are closed within the center land, and are disposed at substantially the same position in the tire circumferential direction,
the notches extend from the center main grooves while inclining toward the leading side on the road surface during tire rotation as the notches extend toward the tire equator, and
a plurality of pairs of the notches are disposed at intervals in the tire circumferential direction.

### <B-2>

In the pneumatic tire as described in <B-1>, the center land includes a plurality of center sipes that extend in the tread width direction and are disposed at intervals in the tire circumferential direction at positions that do not overlap the pair of notches in the tire circumferential direction.

### <B-3>

In the pneumatic tire as described in <B-2>,
the center sipes include a plurality of first center sipes and a plurality of second center sipes that are alternately disposed in the tire circumferential direction, and
a depth of the first center sipes is greater than a depth of the second center sipes.

### <B-4>

In the pneumatic tire as described in <B-3>,
the depth of the first center sipes is between 50% and 100% inclusive relative to a depth of the center main grooves, and the depth of the second center sipes is between 10% and 25% inclusive relative to the depth of the center main grooves.

### <B-5>

In the pneumatic tire as described in <B-2> or <B-3>,
the tread includes:
a shoulder main groove disposed on an inner side in vehicle of the center main grooves; and
an intermediate land disposed between the center main grooves and the shoulder main groove, and
in which the intermediate land includes a plurality of intermediate sipes that extend in the tread width direction and are disposed at intervals in the tire circumferential direction, and
intervals in the tire circumferential direction between the plurality of intermediate sipes are smaller than intervals in the tire circumferential direction between the center sipes.

### <B-6>

In the pneumatic tire as described in <B-5>, the tread includes:
inclined grooves that extend from the shoulder main groove toward the ground contact edge and incline from the leading side toward the trailing side as the inclined grooves extend toward the ground contact edge; and
shoulder blocks defined by the shoulder main groove and the inclined grooves, and
in which the shoulder blocks include shoulder sipes that extend in a direction intersecting the tire circumferential direction and are disposed at intervals in the tire circumferential direction, and
intervals in the tire circumferential direction between the shoulder sipes are smaller than intervals in the tire circumferential direction between the center sipes.

### <B-7>

In the pneumatic tire as described in <B-6>, the shoulder sipes include shoulder sipes that traverse the ground contact edge, and the shoulder sipes extend along at least a part of the inclined grooves.

With the pneumatic tire according to <B> described above, it is possible to provide a pneumatic tire, in which grip performance of a center land is ensured and steering stability is improved, particularly while traveling under wet conditions.

## Claims

1. A pneumatic tire (1), comprising a tread (5) including a ground contact edge (90) with respect to a road surface, the pneumatic tire (1) having a specified rotation direction,
wherein the tread (5) includes:
a shoulder main groove (20) that extends, on an inner side (W1) in a vehicle width direction, while inclining toward the ground contact edge (90) on the inner side (W1) in the vehicle width direction as the shoulder main groove (20) extends from a leading side (C1) toward a trailing side (C2) on the road surface during tire rotation, the shoulder main groove (20) extending in a tire circumferential direction while long portions (21) and short portions (22) having mutually different inclination angles are alternately continuous; and
a shoulder land (70) disposed on the inner side (W1) in the vehicle width direction of the shoulder main groove (20), and
wherein the shoulder land (70) includes:
a first inclined groove (31) that extends toward the ground contact edge (90) continuously with the short portions (22) and inclines toward the trailing side (C2) as the first inclined groove (31) extends toward the ground contact edge (90); and
a second inclined groove (32) that extends toward the ground contact edge (90) from the long portions (21) and inclines toward the trailing side (C2) as the second inclined groove (32) extends toward the ground contact edge (90).

2. The pneumatic tire (1) according to claim 1,
wherein the first inclined groove (31) is bent such that an inclination angle with respect to a tread width direction (W) becomes smaller in a vicinity passing through the ground contact edge (90),
in a vicinity of the ground contact edge (90), inclination angles of the first inclined groove (31) and the second inclined groove (32) with respect to the tread width direction (W) are substantially the same, and
the first inclined groove (31) and the second inclined groove (32) are disposed at substantially the same intervals in the tire circumferential direction.

3. The pneumatic tire (1) according to claim 1 or 2, wherein the shoulder land (70) includes a branch groove (33) that branches from the second inclined groove (32) toward the leading side (C1) and is closed within the shoulder land (70).

4. The pneumatic tire (1) according to at least one of claims 1 to 3, wherein the tread (5) includes a center main groove (10) extending in the tire circumferential direction between a tire equator (S1) and the shoulder main groove (20).

5. The pneumatic tire (1) according to any one of claims 1 to 4,
wherein the tread (5) includes:
a pair of center main grooves (10) disposed on both sides of a tire equator (S1) and extending in the tire circumferential direction; and
a center land (50) disposed between the pair of center main grooves (10) and extending in the tire circumferential direction, and
wherein the center land (50) includes a pair of notches (15) that communicate with respective ones of the pair of center main grooves (10), are closed within the center land (50), and are disposed at substantially the same position in the tire circumferential direction,
the notches (15) extend from the center main grooves (10) while inclining toward the leading side (C1) on the road surface during tire rotation as the notches (15) extend toward the tire equator (S1), and
a plurality of pairs of the notches (15) are disposed at intervals in the tire circumferential direction.

6. The pneumatic tire (1) according to claim 5, wherein the center land (50) includes a plurality of center sipes (80) that extend in the tread width direction (W) and are disposed at intervals (P1) in the tire circumferential direction at positions that do not overlap the pair of notches (15) in the tire circumferential direction.

7. The pneumatic tire (1) according to claim 6,
wherein the center sipes (80) include a plurality of first center sipes (80A) and a plurality of second center sipes (80B) that are alternately disposed in the tire circumferential direction, and
a depth of the first center sipes (80A) is greater than a depth of the second center sipes (80B).

8. The pneumatic tire (1) according to claim 7,
wherein the depth of the first center sipes (80A) is between 50% and 100% inclusive relative to a depth of the center main grooves (10), and
the depth of the second center sipes (80B) is between 10% and 25% inclusive relative to the depth of the center main grooves (10).

9. The pneumatic tire (1) according to at least one of claims 6 to 8,
wherein the tread (5) includes:
a shoulder main groove (20) disposed on an inner side in vehicle width direction (W1) of the center main grooves (10); and
an intermediate land (60) disposed between the center main grooves (10) and the shoulder main groove (20), and
wherein the intermediate land (60) includes a plurality of intermediate sipes (81) that extend in the tread width direction (W) and are disposed at intervals (P2) in the tire circumferential direction, and
intervals (P2) in the tire circumferential direction between the plurality of intermediate sipes (81) are smaller than intervals (P1) in the tire circumferential direction between the center sipes (80).

10. The pneumatic tire (1) according to at least one of claims 6 to 9,
wherein the tread (5) includes:
inclined grooves (30) that extend from the shoulder main groove (20) toward the ground contact edge (90) and incline from the leading side (C1) toward the trailing side (C2) as the inclined grooves (30) extend toward the ground contact edge (90); and
shoulder blocks (73) defined by the shoulder main groove (20) and the inclined grooves (30), and
wherein the shoulder blocks (73) include shoulder sipes (82) that extend in a direction intersecting the tire circumferential direction and are disposed at intervals in the tire circumferential direction, and
intervals in the tire circumferential direction between the shoulder sipes (82) are smaller than intervals (P1) in the tire circumferential direction between the center sipes (80).

11. The pneumatic tire (1) according to claim 10, wherein the shoulder sipes (82) include shoulder sipes (82) that traverse the ground contact edge (90), and the shoulder sipes (82) extend along at least a part of the inclined grooves (30).
